(19) Europäisches Patentamt

European Patent Office

Office européen des brevets

(11) EP 0 715 881 B1

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int. Cl.$^6$: **B01F 7/04**

(21) Anmeldenummer: **95118356.5**

(22) Anmeldetag: **22.11.1995**

(54) **Vollständig selbstreinigender Mischer/Reaktor**

Fully self-cleaning mixer/reactor

Réacteur-mélangeur complètement autonettoyant

(84) Benannte Vertragsstaaten:
**BE CH DE FR GB LI NL**

(30) Priorität: **05.12.1994 DE 4443151**
**19.06.1995 DE 19522087**

(43) Veröffentlichungstag der Anmeldung:
**12.06.1996 Patentblatt 1996/24**

(73) Patentinhaber: **BAYER AG**
**51368 Leverkusen (DE)**

(72) Erfinder:
• **Schebesta, Klaus**
**D-51371 Leverkusen (DE)**
• **Schuchardt, Heinrich**
**D-51373 Leverkusen (DE)**
• **Ullrich, Martin**
**D-51375 Leverkusen (DE)**

(56) Entgegenhaltungen:
**EP-A- 0 460 466          EP-A- 0 528 210**
**EP-A- 0 638 354**

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen mehrachsigen Mischer/Reaktor mit großem freien nutzbaren Volumen, der sich kinematisch selbst reinigt, bestehend wenigstens aus einem Gehäuse und zwei oder mehr parallelen gegensinnig rotierenden Wellen, auf denen mit axialem Abstand untereinander, miteinander kämmende Gruppen von Zahnrädern angebracht sind. Diese Zahnräder sind durch Knetbarren miteinander verbunden. Weitere Knetbarren, die jeweils nur mit einem Zahnrad verbunden sind, sind ebenfalls auf den Zahnradstirnflächen angeordnet.

Die Erfindung richtet sich auf einen Mischer/Reaktor der zur verfahrenstechnischen Behandlung von Fluiden und kohäsiven Schüttgütern geeignet ist. Der Mischer/Reaktor ist vollständig kinematisch selbstreinigend und weist ein großes freies Nutzvolumen auf.

Unter anderem bei der Erzeugung und Verarbeitung von Kunststoffen müssen hochviskose Flüssigkeiten verfahrenstechnisch behandelt werden. Insbesondere werden Apparate zum Mischen und Ausdampfen benötigt. Diese müssen eine gute Mischwirkung und im Fall der Ausdampfung auch eine schnelle Erneuerung der freien Oberfläche des Mischgutes aufweisen.

Produktablagerungen an den Wänden solcher Mischer können zur Verfahrensbeeinträchtigungen führen. In den Ablagerungen werden unerwünschte Nebenreaktionen auf Grund der wesentlich verlängerten Verweilzeit des Mischgutes im Reaktor begünstigt. Dieses führt zur Verunreinigung des Produktes. Produktablagerungen an den Wänden können durch kinematische Selbstreinigung des Mischers vermieden werden.

Als Beispiel sei die Herstellung von thermotropen, flüssigkristallinen Polyestern genannt. Geschwindigkeitsbestimmend in der Endstufe der Polykondensation ist der Stoffübergang des Kondensates in die unter vermindertem Druck befindliche Gasphase des Reaktors. Dieser erfordert eine möglichst große Stoffübergangsfläche und eine möglichst schnelle Erneuerung derselben. Auf Grund der ausgeprägten Strukturviskosität neigt das Kondensationsprodukt zu Wandablagerungen in nicht gemischten Bereichen. Durch die längere Verweilzeit entstehen mittelfristig schwarze Crackprodukte, die, wenn sie in den Produktstrom gelangen, zu nicht verkaufsfähiger Ware führen.

Im Hinblick auf die Minimierung der Herstellungs- und Betriebskosten eines Reaktors/Mischers wird dabei zusätzlich ein möglichst großes, freies nutzbares Volumen angestrebt, d.h. die Rührorgane sollten einen möglichst kleinen Anteil des Gehäusevolumen ausfüllen.

Diese Anforderungen werden durch den in der Schrift DE-A-4326807 (offenbart am 16-2-'95) beschriebenen Apparat schon erfüllt. Er weist jedoch einige gravierende Schwächen auf:

Die axiale Durchlässigkeit, d.h. die Durchlässigkeit entlang der Rotorenachse, für Gase ist bei diesem Apparat vergleichsweise gering. Die auf den Wellen spiralförmig angeordneten Förderschaufeln trennen den Produktraum gleichsam in Kammern auf, die nur durch sehr schmale Spalte miteinander verbunden sind.

Ein anderer Mischer gemäß dem einleitenden Teil des Anspruchs 1, der den genannten Anforderungen jedoch nur teilweise genügt, ist in der Schrift DE 41 26 425 A1 beschrieben. Ein wesentlicher Mangel dieses Mischers liegt in seinem Verhalten bei Beanspruchung durch hochviskoses Mischgut. Zur Aufnahme von Biegekräften beispielsweise beim Mischen pastöser Fluide kann bei diesem Mischer nur die Welle der Rotoren dienen. Die Welle soll aber andererseits möglichst dünn sein, um ein großes, freies nutzbares Volumen zu erhalten. Hierdurch ist bei den (wegen der Selbstreinigung) ebenfalls angestrebten Kleinen Spielen der Mischerbauteile zueinander auf Grund der Durchbiegung der Welle ein Verhältnis zwischen Mischerlänge und Achsenabstand der Rotoren von mehr als 5 bestenfalls 7 kaum zu erreichen. Dies begrenzt insbesondere bei kontinuierlichen Verfahren die realisierbare Zahl von idealen Rührstufen in einem solchen Reaktor/Mischer.

Beide Mischvorrichtungen weisen außerdem folgende gemeinsame Defizite auf:

Zwischen den Knetbarren und der Gehäusewand wird das Produkt in einem spitzen Winkel verdichtet und gequetscht. Dies führt bei extrem hoher Viskosität des Mischgutes oder gar feststoffhaltigem Mischgut rasch zu einem Blockieren der Wellen.

Durch die Knetbarren wird gehäusewandnahes Produkt immer nach außen gedrückt. An Ausdampfdomen oder anderen vergleichbaren Stutzen kommt es zu einem Produktaustrag, der die Dome schließlich verschließt.

Aufgabe der Erfindung ist einen Mischer/Reaktor bereitzustellen, der kinematisch selbstreinigend ist, ein möglichst großes freies Volumen aufweist und die genannten Nachteile der bekannten Mischer nicht aufweist.

Die Aufgabe wird erfindungsgemäß gelöst, indem in einem mehrwelligen Mischer auf jeder Welle, axial zueinander versetzt, miteinander kämmende Gruppen von Zahnrädern angebracht sind. Diese Zahnräder sind durch Knetbarren miteinander verbunden. Weitere Knetbarren, die jeweils nur mit einem Zahnrad verbunden sind, sind ebenfalls auf den Zahnradstirnflächen angeordnet.

Dadurch daß die Zahnräder in axialer Richtung einen hinreichenden Abstand voneinander haben und dadurch, daß sie nur einen Teil des Gehäusequerschnittes abdecken, bleibt die axiale Durchlässigkeit für den Brüden gewahrt.

Da die Zahnräder durch Knetbarren miteinander verbunden sind, bilden sie mit diesen und der Welle eine Rahmenstruktur, die Biegekräfte wesentlich besser aufnehmen kann als die Welle allein.

Gegenstand der Erfindung ist ein mehrachsiger Mischer/Reaktor bestehend aus einem Gehäuse, aus zwei oder mehr parallelen, gegensinnig rotierenden Wellen auf denen axial versetzt, miteinander kämmende Gruppen von Zahnrädern angeordnet sind, welche durch Knetbarren miteinander verbunden sind und weiteren Knetbarren, die jeweils nur mit einem Zahnrad verbunden sind und ebenfalls auf den Zahnradstirnflächen angeordnet sind, wobei

jeder Zahn eines jeden Zahnrades sowohl mit dem in axialer Richtung davor als auch mit dem dahinterliegenden Zahnrad durch einen Knetbarren verbunden ist,

jeder Zahn eines jeden Zahnrades ausgenommen an den Stirnseiten des Mischers/Reaktors an jeder der beiden Stirnseiten mindestens einen weiteren Knetbarren trägt,

die Stirnseiten eines jeden Zahnrades, ausgenommen diejenigen, die durch die Gehäusestirnflächen gereinigt werden, durch die Knetbarren einer jeweils anderen benachbarten Welle kinematisch gereinigt werden,

die restlichen Oberflächen der Zahnräder entweder durch das Gehäuse oder durch die im Eingriff befindlichen Zahnräder einer benachbarten Welle oder die benachbarte Welle vollständig kinematisch gereinigt werden,

die Stirnflächen der Knetbarren, soweit sie nicht mit Zahnrädern verbunden sind, durch die Zahnräder an einer jeweils anderen benachbarten Welle gereinigt werden,

die restlichen Oberflächen der Knetbarren einer jeden Welle entweder durch das Gehäuse oder durch eine andere benachbarte Welle oder durch die Knetbarren einer anderen benachbarten Welle vollständig kinematisch gereinigt werden,

die in einem beliebigen Radialschnitt auftretenden Schnittkanten von Zahnrädern bzw. Knetbarren geometrisch alle entweder Kreisbögen um den Rotationsmittelpunkt oder Epizykloidenabschnitte sind,

die in einem beliebigen Radialschnitt auftretenden Schnittkanten von Zahnrädern bzw. Knetbarren geometrisch alle konkav sind, wenn sie nach innen zeigen (d.h. wenn, geometrisch betrachtet, der Normalenvektor auf der Schnittkante eine Komponente in Richtung der Rotationsachse aufweist) und

die in einem beliebigen Radialschnitt auftretenden Schnittkanten der Knetbarren und alle Schnittkanten der Flächen der Zahnräder, welche das Gehäuse am Umfang reinigen, geometrisch alle konvex sind, wenn sie nach außen zeigen (d.h. wenn, geometrisch betrachtet, der Normalenvektor auf der Schnittkante eine Komponente weg von der Rotationsachse aufweist) ausgenommen die Schnittkanten von Flächen, die durch eine andere Welle gereinigt werden.

Bevorzugt Ausführungen der Vorrichtung sind in den abhängigen Ansprüchen beschrieben.

In diesem Mischer werden die Stirnseiten aller Zahnräder durch das Gehäuse oder durch die Knetbarren eines im Eingriff befindlichen Rotors, die sonstigen Zahnradflächen durch im Eingriff befindliche Zahnräder oder die Wellen oder das Gehäuse gereinigte Die Stirnfläche der Knetbarren wird durch Zahnräder, die anderen Flächen der Knetbarren werden entweder durch das Gehäuse oder durch die Welle oder durch die Knetbarren eines anderen Rotors und das Gehäuse durch Knetbarren und Zahnräder kinematisch vollständig gereinigt. Das Nutzvolumen des Mischers beträgt vorzugsweise größer 65 %.

Unter kinematischer Reinigung oder kurz Reinigung wird hier die kleinstmögliche Annäherung der Teile des Mischers bei der Drehung der Rotoren verstanden, die bei Berücksichtigung der Fertigungstoleranz während des Mischens erreicht werden kann, so daß die genannten Teile ohne Blockierung aneinander vorbeigleiten können.

Wie beschrieben kann insgesamt eine Selbstreinigung insbesondere eine vollständige Selbstreinigung aller Oberflächen des Mischraums erreicht werden.

Dadurch, daß die Zahnräder in axialer Richtung einen hinreichenden Abstand von einander haben und dadurch, daß sie nur einen Teil des Gehäusequerschnittes aodecken, bleibt die axiale Durchlässigkeit für das Mischgut gewahrt.

Da die Zahnscheiben durch Knetbarren miteinander verbunden sind, bilden sie mit diesen und der Welle eine Rahmenstruktur, die Biegekräfte wesentlich besser aufnehmen kann als die Welle allein.

Entsprechend der Anordnung der Knetbarren, welche die Zahnräder am Umfang der Rotoren miteinander verbinden, wird ein maximales Flächenträgheitsmoment und damit eine minimale Durchbiegung der Wellen erreicht.

Die Geometrie der in einem Radialschnitt auftretenden Schnittkanten der Rotoren geeigneter erfindungsgemäßer Mischer/Reaktoren läßt sich mathematisch folgendermaßen einfach beschreiben:

Es seien 1 und 2 zwei Rotoren mit den Winkelgeschwindigkeiten $\omega_1$ und $\omega_2$ und den Mittelpunkten

$$\begin{pmatrix} 0 \\ 0 \end{pmatrix} \quad \text{und} \quad \begin{pmatrix} a \\ 0 \end{pmatrix} .$$

Dann kann die Bewegung eines Punktes

$$\begin{pmatrix} x_1 \\ y_1 \end{pmatrix}$$

des Rotors 1 im Koordinatensystem des Rotors 2 beschrieben werden als:

$$\begin{pmatrix} x_2 \\ y_2 \end{pmatrix} = \begin{pmatrix} \cos(\omega_2 * t) & \sin(\omega_2 * t) \\ -\sin(\omega_2 * t) & \cos(\omega_2 * t) \end{pmatrix} * \left( \begin{pmatrix} \cos(\omega_1 * t) & -\sin(\omega_1 * t) \\ \sin(\omega_1 * t) & \cos(\omega_1 * t) \end{pmatrix} * \begin{pmatrix} x_1 \\ y_1 \end{pmatrix} + \begin{pmatrix} a \\ 0 \end{pmatrix} \right)$$

In einer bevorzugten Ausführungsform rotieren die Rotoren betragsmäßig gleichschnell. Hier gilt $\omega_1 = -\omega_2$.

Gehäuse und/oder Rotoren der erfindungsgemäßen Mischer können mit grundsätzlich bekannten Kühl- und Heizeinrichtungen versehen werden, um z.B. den Reaktionsablauf innerhalb des Mischers beeinflussen zu können.

Eine komplette Beheizung bzw. Kühlung der Rotoren, ist in einer bevorzugten Ausführung des erfindungsgemäßen Mischers/Reaktors möglich, wenn das Heiz/Kühlmedium durch ein Wellenende geleitet wird, jeweils ein Teilstrom des Mediums durch jeden Zahn des ersten Zahnrades und von dort den Folgen miteinander verbundener Zahnräder und Knetbarren folgend über die gesamte Rotorlänge bis zum letzten Zahnrad und von dort wiederum zum dem Eintritt entgegengesetzten Wellenaustritt geleitet wird, wobei ein weiterer Teilstrom des Heiz-/Kühlmediums durch eine Längsbohrung der Welle geführt wird, um auch diese zu beheizen bzw. zu kühlen.

Am Gehäuse können Stutzen für Ausgasungsableitungen, Mischgutzu- und ableitungen sowie für die Meßgeräteankopplung vorgesehen sein.

Eine Förderung wandnahen Mischgutes nach außen, und die Bildung von Ablagerungen in Ausdampfdomen, werden in einer bevorzugten Ausführung der Erfindung vermieden, indem alle nach außen weisenden Flächen der Knetbarren und alle nach außen weisenden Flächen der Zahnräder, welche mit mindestens einer Kante das Gehäuse am Umfang reinigen, durch die Welle eines im Eingriff befindlichen Rotors oder durch das Gehäuse kinematische gereinigt werden. Die bei der Reinigung dann auftretenden produktseitigen Winkel zwischen Gehäuse und Knetbalken bzw. dem Zahn eines Zahnrades sind dann stumpf. Das wandnahe Mischgut wird nach innen zur Rotationsachse hin gefördert.

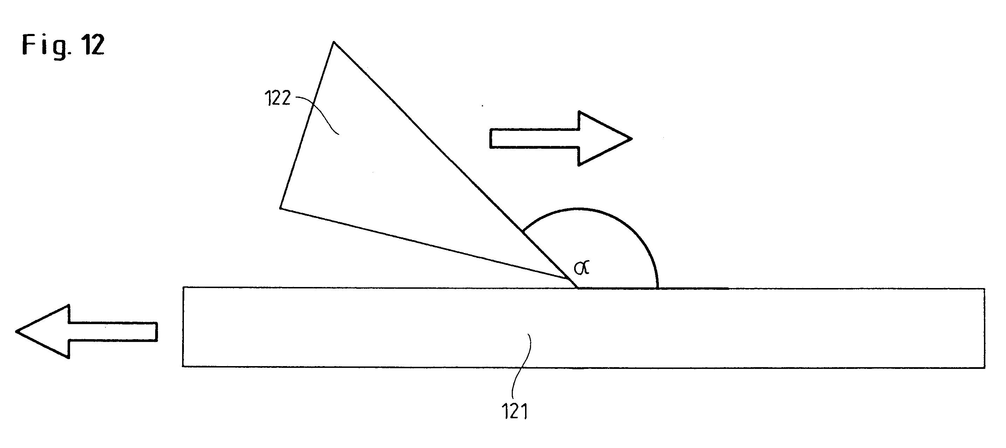

Unter produktseitigem Winkel $\alpha$ (siehe auch Fig. 12) wird hier der Winkel zwischen Mischerflächen verstanden, der sich an der Kante eines Zahnes oder Knetbalkens zwischen der Fläche des Zahnes bzw. Knetbalkens (122) und zu reinigender Fläche (121) des Mischers in Bewegungsrichtung der Kante aufspannt.

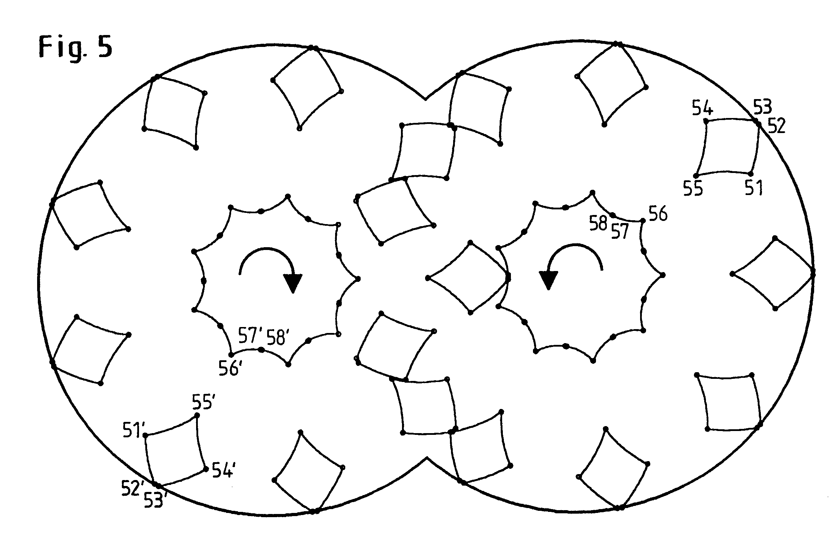

Besonders bevorzugt ist eine Ausführung bei der gilt, daß der Abstand zwischen Innenkanten (55, 55' in Figur 5) der Knetbarren 4, 4', 5, 5' und Mitte der zugehörigen Welle 2, 2' kleiner gleich dem Teilkreisradius ist. Unter dieser Voraussetzung werden die Stirnseiten der Zahnräder vollständig abgereinigt.

Der Teilkreisradius $r_{t1}$ eines Rotors, der mit der Winkelgeschwindigkeit $\omega_1$ rotiert und im Eingriff mit einem anderer parallelen Rotor ist, der mit der Winkelgeschwindigkeit $\omega_2$ rotiert, ergibt sich zu

$$r_{t1} = \frac{\omega_2}{\omega_2 - \omega_1} a,$$

wobei a den Abstand zwischen den Mitten der Rotoren (Achsabstand) bezeichnet und gegensinnige Rotation durch entgegengesetzte Vorzeichen der Winkelgeschwindigkeiten ausgedrückt wird.

Weitere bevorzugte Ausführungsformen sind den Unteransprüchen zu entnehmen.

Die erfindungsgemäßen Rotoren können darüberhinaus beliebig mit an sich bekannten gegebenenfalls selbstreinigenden Misch- und Knetelementen erweitert bzw. kombiniert werden, z.B. mit Schneckenelementen um eine Förderwirkung zu erzielen.

Ferner können die Knetbarren nicht nur achsparallel, sondern auch entlang einer Spirale um die Rotationsachse angeordnet werden, um eine Förderwirkung entlang der Rotorenachse zu erzielen.

Nachstehend wird die Erfindung anhand der beigefügten Figuren beispielhaft näher erläutert:

Fig. 1 zeigt die Darstellung des prinzipiellen Aufbaus eines erfindungsgemäßen Mischers 6 in Aufsicht (Fig. 1b) und Seitenansicht (Fig. 1a) (Dabei ist das Gehäuse jeweils nur als Schnitt angedeutet).

Fig. 2 zeigt die Darstellung einer Ausführungsform des erfindungsgemäßen Mischers 6. (Das Gehäuse ist nicht dargestellt).

Fig. 3 zeigt die Darstellung einer weiteren Ausführungsform des erfindungsgemäßen Mischers 6, bei dem die Knetbarren 24, 24', 25, 25' und Zahnräder 23, 23' so gestaltet sind, daß eine Förderung wandnahen Mischgutes nach außen nicht erfolgt. (Das Gehäuse ist nicht dargestellt).

Fig. 4 zeigt einen Radialschnitt (vergleichbar der Linie B-B in Fig. 1a) durch ein Zahnradpaar 3, 3' eines Mischers 6 gemäß Fig. 2.

Fig. 5 zeigt einen Radialschnitt (vergleichbar der Linie A-A in Fig. 1a) durch die Knetbalken 4, 4', 5, 5' eines Mischers 6 gemäß Fig. 2.

Fig. 6 zeigt einen Radialschnitt (vergleichbar der Linie B-B in Fig. 1a) durch ein Zahnradpaar 23, 23' eines Mischers 6 gemäß Fig. 3.

Fig. 7 zeigt einen Radialschnitt (vergleichbar der Linie A-A in Fig. 1a) durch die Knetbalken 24, 24', 25, 25' eines Mischers 6 gemäß Fig. 3, hier im Bereich eines Ausdampfdomes.

Fig. 8 zeigt in einem Radialschnitt (vergleichbar der Linie B-B in Fig. 1a) die Darstellung der Relativbewegung eines Zahnes 7, eines Zahnrades 3 des Mischers 6 nach Fig. 2 bezüglich des benachbarten Rotors 8' in Momentaufnahmen.

Fig. 9 zeigt in einem Radialschnitt (vergleichbar der Linie A-A in Fig. 1a) die Darstellung der Relativbewegung eines Knetbarrens 4, des Mischers 6 nach Fig. 2 bezüglich des anderen Rotors 8' in Momentaufnahmen.

Fig. 10 zeigt in einem Radialschnitt (vergleichbar der Linie B-B in Fig. 1a) die Darstellung der Relativbewegung eines Zahnes 27, eines Zahnrades 23 des Mischers 6 nach Fig. 3 bezüglich des benachbarten Rotors 8' in Momentaufnahmen.

Fig. 11 zeigt in einem Radialschnitt (vergleichbar der Linie A-A in Fig. 1a) die Darstellung der Relativbewegung eines Knetbarrens 24 des Mischers 6 nach Fig. 3 bezüglich der Knetbarren der anderen Welle in Momentaufnahmen.

Fig. 12 zeigt ein Schema zur Erläuterung des Begriffes "produktseitiger Winkel".

Fig. 13 zeigt einen Radialschnitt (vergleichbar der Linie A-A in Fig. 1a) durch die Knetbarren 4, 4', 5, 5' eines Mischers 6 gemäß Fig. 2.

Fig. 14 zeigt in einem Radialschnitt (vergleichbar der Linie A-A in Fig. 1a) die Darstellung der Relativbewegung eines Knetbarrens 4, des Mischers 6 nach Fig. 2 bezüglich des anderen Rotors 8' in Momentaufnahmen.

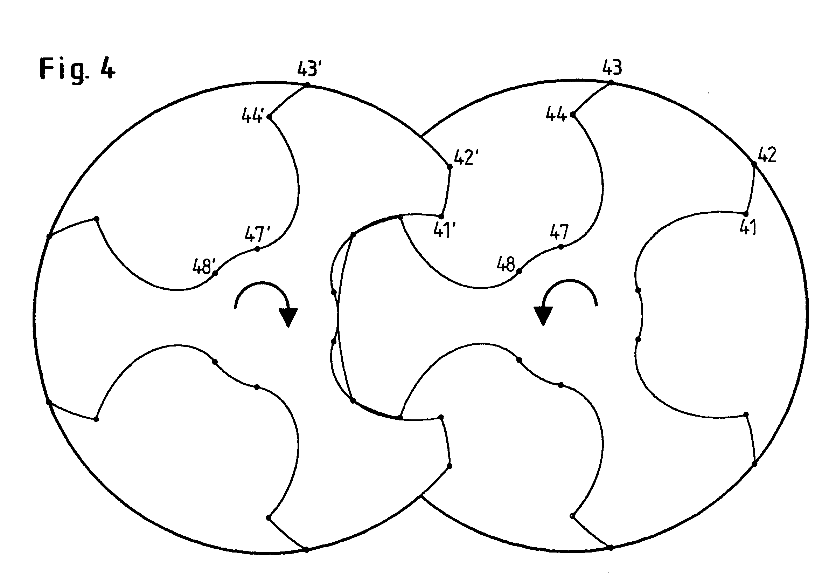

Anmerkung: In den Figuren 4 - 11 sind die Punkte, auf die Bezug genommen wird, nicht mit Bezugslinien, sondern mit Kreisen markiert.

## Beispiele

### Beispiel 1

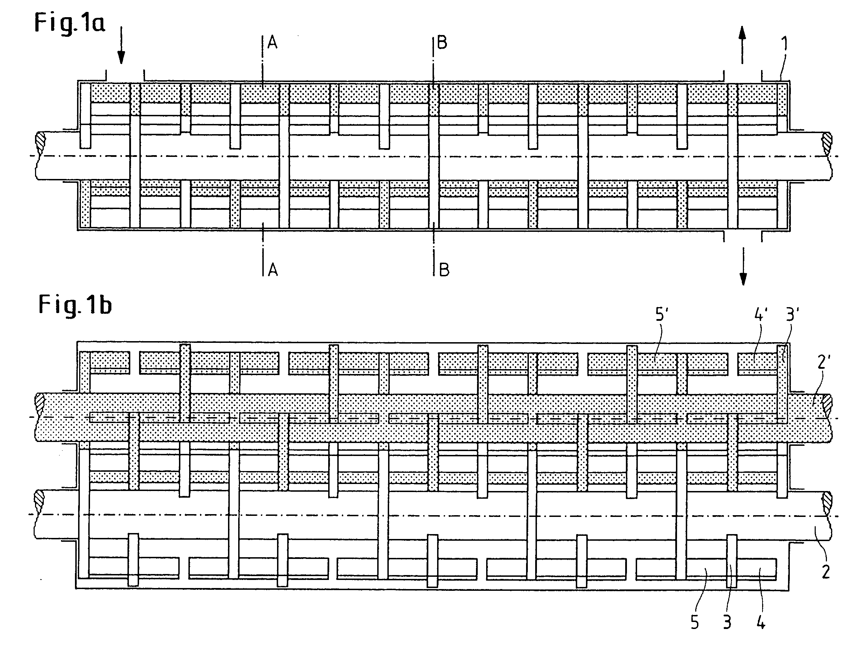

In Fig. 1 wird der prinzipielle Aufbau eines erfindungsgemäßen Mischers gezeigt. Gezeigt wird ein zweiwelliger Mischer 6 der auf jeder Welle 2, 2' mit axialem Abstand untereinander, miteinander kämmende Gruppen von Zahnrädern 3, 3' enthält. Diese Zahnräder 3, 3' sind durch Knetbarren 5, 5' miteinander verbunden. Weitere Knetbarren 4, 4', die jeweils nur mit einem Zahnrad verbunden sind, sind ebenfalls auf den Zahnradstirnflächen angeordnet.

Desweiteren verfügt der Mischer über einen Ein- und Auslaß für das Mischgut als auch über einen Brüdenstutzen.

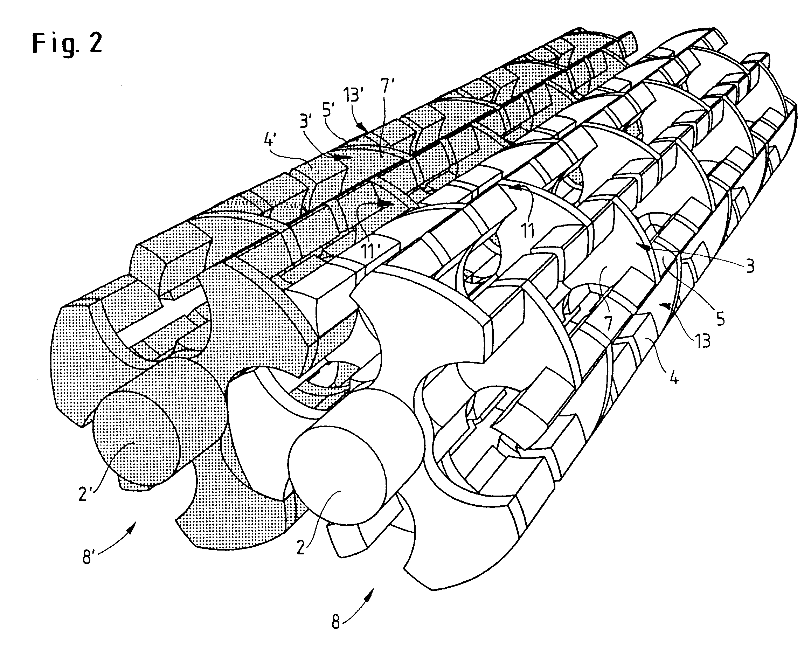

Fig. 2 zeigt die räumliche Darstellung der Rotoren 8, 8' einer Ausführungsform des erfindungsgemäßen Mischers 6. Auf eine Darstellung des umschließenden Gehäuses wurde dabei verzichtet. Der Mischer weist zwei Wellen 2, 2' auf. Auf diesen sind Zahnräder 3, 3' mit jeweils drei Zähnen 7, 7' befestigt. Jeder Zahn eines Zahnrades 3, 3' ist (außer an den beiden Rotorenden) mit jeweils einem Zahn eines axial vor und einem Zahn eines axial hinter ersterem liegenden Zahnrades durch einen Knetbarren 5, 5' verbunden. Auf jeder Zahnstirnseite ist ein weiterer Knetbarren 4, 4' befestigt. Dabei sind die Knetbarren 4, 4' und 5, 5' querschnittsgleich ausgeführt.

Das freie nutzbare Volumen dieser erfindungsgemäßen Variante beträgt 67,8 % des Gehäuseinnenvolumens.

Fig. 4 zeigt einen Radialschnitt (gemäß Linie B-B in Fig. 1a) durch ein Zahnradpaar 3, 3' eines Mischers 6 gemäß Fig. 2. Die Reinigung der Flächen 41-42 erfolgt durch die Kanten 41', die der Flächen 42-43 durch das Gehäuse, die der Flächen 43-44 durch die Kanten 44', die der Flächen 44-47 durch die Kanten 43', die der Flächen 47-48 durch die Flächen 42'-43' und die der Flächen 48-41 durch die Kanten 42'.

Fig. 5 zeigt einen Radialschnitt (gemäß Linie A-A in Fig. 1a) durch die Knetbarren 4, 4', 5, 5' eines Mischers 6 gemäß Fig. 2. Die Reinigung der Flächen 51-52 erfolgt wie erkennbar durch die Kanten 51', die der Flächen 52-53 durch das Gehäuse, die der Flächen 53-54 durch die Kanten 54', die der Flächen 54-55 und 56-57 durch die Kanten 53', die der Flächen 57-58 durch die Flächen 52'-53' und die der Flächen 58-56 und 55-51 durch die Kanten 52'.

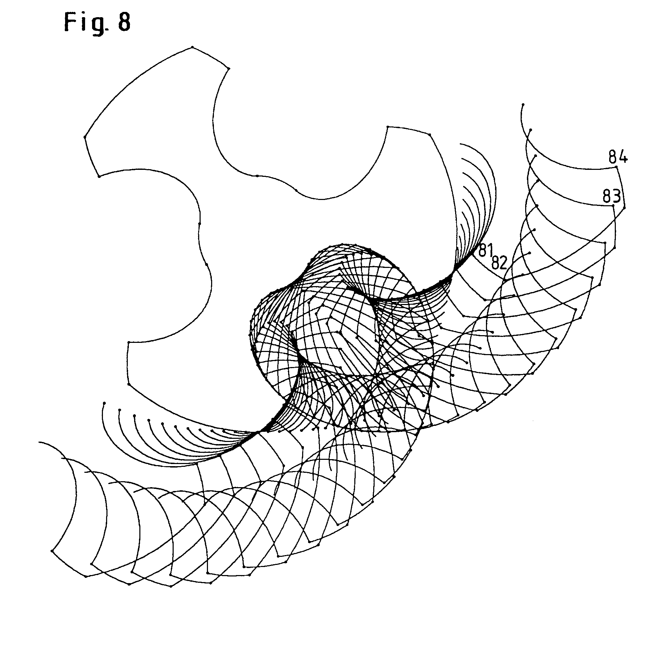

Fig. 8 zeigt in einem Radialschnitt (gemäß Linie B-B in Fig. 1a) die Relativbewegung eines Zahnes 81-82-83-84 eines Zahnrades 3 des Mischers 6 nach Fig. 2 bezüglich des anderen Rotors 8' in Momentaufnahmen während einer halben Umdrehung.

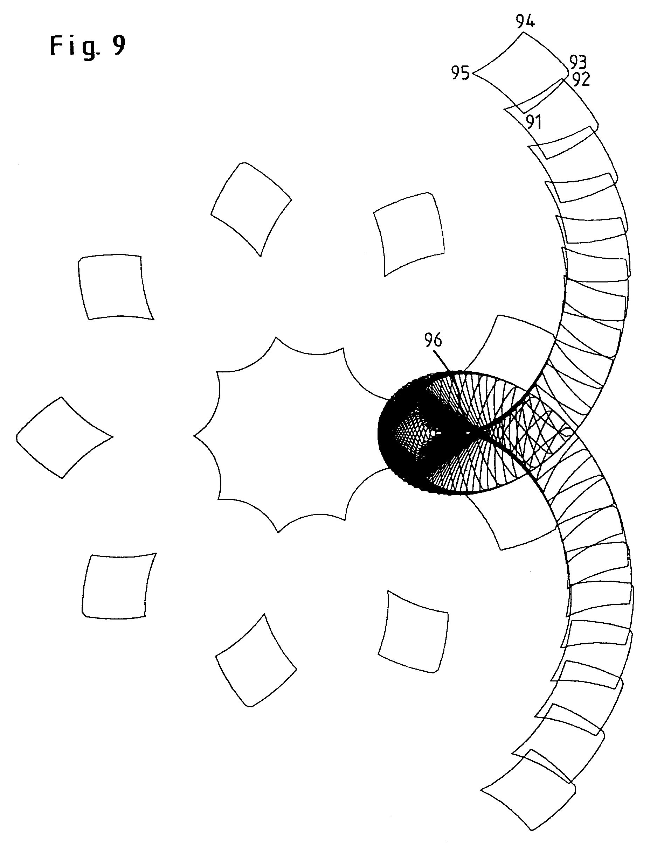

Fig. 9 zeigt in einem Radialschnitt (gemäß Linie A-A in Fig. 1a) die Relativbewegung eines Knetbalkens 91-92-93-94-95 des Mischers 6 nach Fig. 2 bezüglich des anderen Rotors 8' in Momentaufnahmen.

## Beispiel 2

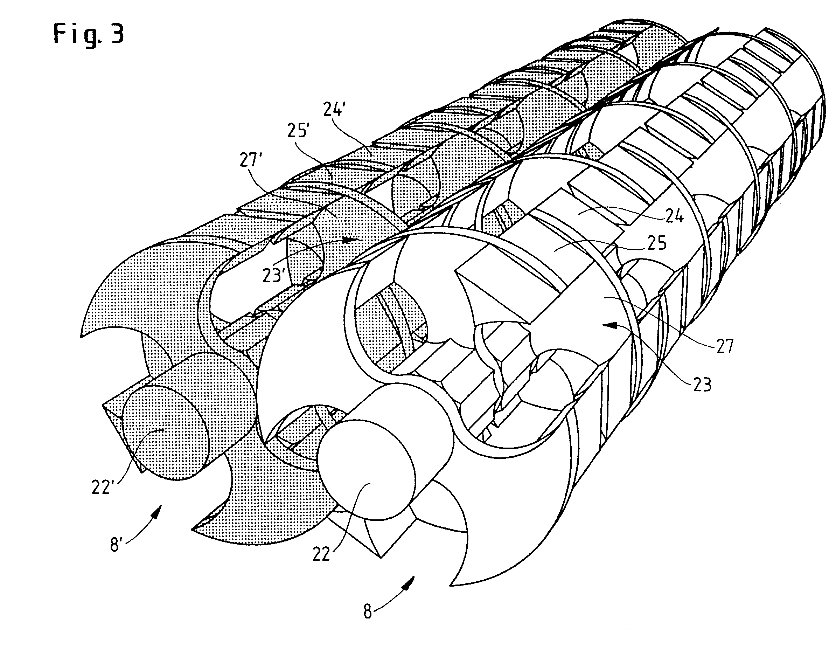

Fig. 3 zeigt die räumliche Darstellung der Rotoren 8, 8' eines bevorzugten erfindungsgemäßen Mischers 6. Auf eine Darstellung des Gehäuses 1 wurde verzichtet. Er weist zwei Wellen 22, 22' auf. Auf diesen sind Zahnräder 23, 23' mit jeweils zwei Zähnen 27, 27' befestigt. Jeder Zahn 27 eines Zahnrades 23, ist mit jeweils einem Zahn eines axial vor und einem Zahn eines axial hinter ersterem liegenden Zahnrades durch einen Knetbarren 25, 25' verbunden. Auf jeder Zahnstirnseite ist ein weiterer Knetbarren 24, befestigt. Die Knetbarren 24, 24' und 25, 25' sind querschnittsgleich ausgeführt.

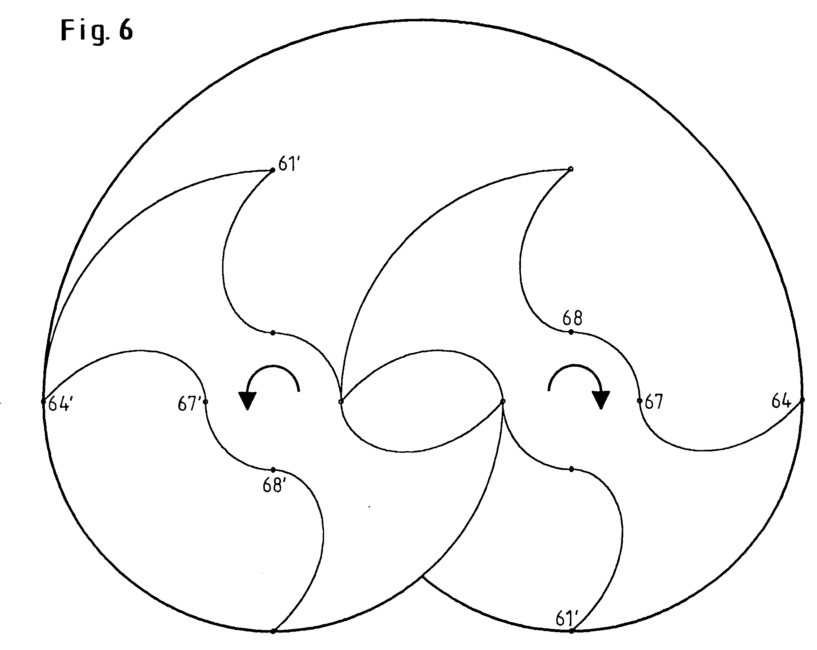

Fig. 6 zeigt einen Radialschnitt (vergleichbar der Linie B-B in Fig. 1a) durch ein Zahnradpaar 23, 23' eines Mischers 6 gemäß Figur 3. Die Reinigung der Flächen 61-64 geschieht durch das Gehäuse, die der Flächen 64-67 durch die Kanten 64', die der Flächen 67-68 durch die Flächen 61'-64' und die der Flächen 68-61 durch die Kanten 61'.

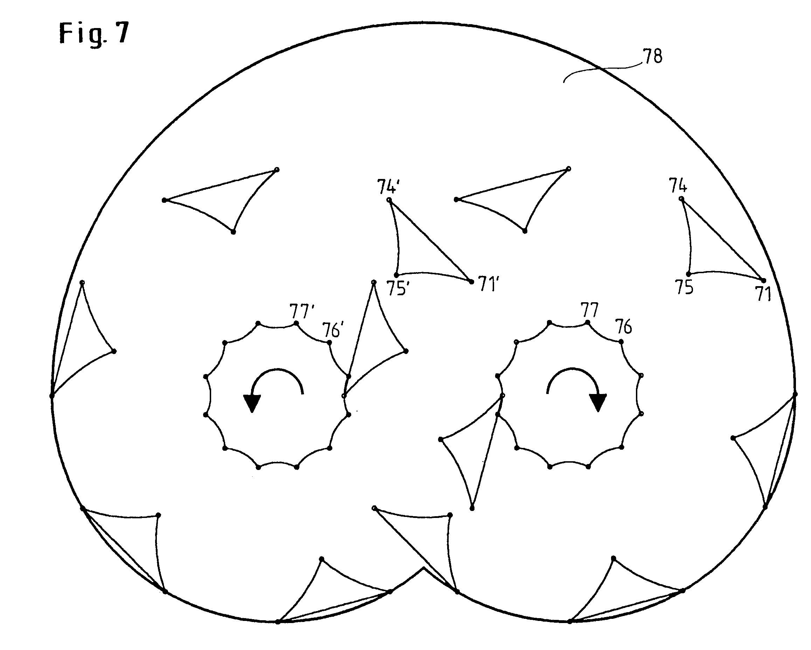

Fig. 7 zeigt einen Radialschnitt (vergleichbar der Linie A-A in Fig. 1a) durch die Knetbalken 24, 24', 25, 25' eines Mischers 6 gemäß Figur 3. Die Reinigung der Flächen 71-74 der Knetbalken erfolgt durch die Welle bei 77', die der Flächen 74-75 durch die Kanten 74', die der Flächen 76-77 durch die Kanten 71' und 74' und die der Flächen 75-71 durch die Kanten 71'. Das Gehäuse 1 weist hier insbesonders einen Ausdampfdom 78 auf.

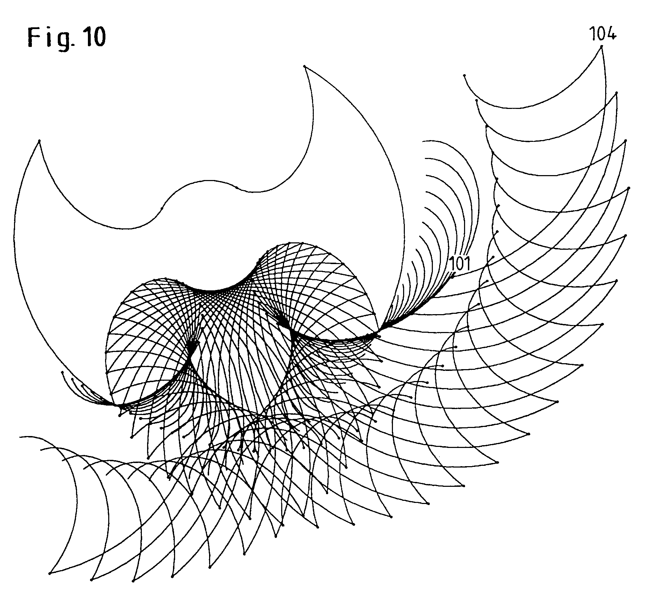

Fig. 10 zeigt in einem Radialschnitt (vergleichbar der Linie B-B in Fig. 1a) die Relativbewegung eines Zahnes 101-104 eines Zahnrades des Mischers 6 nach Fig. 3 bezüglich des anderen Rotors in Momentaufnahmen während einer halben Umdrehung.

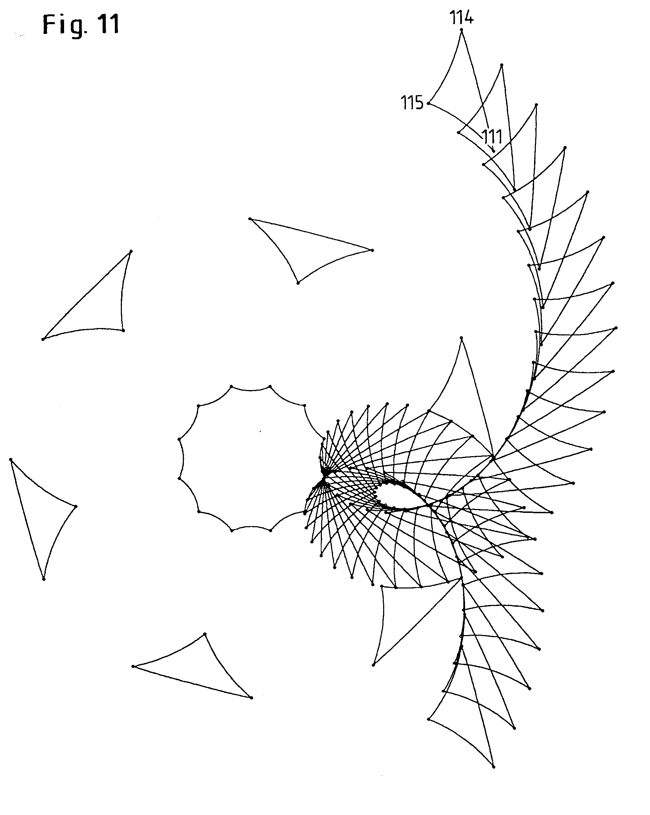

Fig. 11 zeigt in einem Radialschnitt (vergleichbar der Linie A-A in Fig. 1a) die Relativbewegung eines Knetbalkens 111-114-115 des Mischers nach Fig. 3 bezüglich des anderen Rotors in Momentaufnahmen.

Dadurch, daß die Reinigung der nach außen weisenden Flächen der Zahnräder 61-64 durch das Gehäuse und die nach außen weisenden Flächen der Knetbarren 71-74 durch die Wellen 76'-77' erfolgt, kann an der Wand kein Mischgut nach außen gefördert werden. Es wird dadurch verhindert, daß Mischgut oder Produkt in gegebenenfalls angebrachte Vakuumdome oder Stützen für Meßgeräte verdrängt wird. Die Ausführung ist deshalb geeignet zur Benutzung mit einem über die gesamte Reaktorlänge reichenden Ausdampfdom, wie in Fig. 7 als Gehäuseumriß beispielhaft angedeutet.

## Beispiel 3

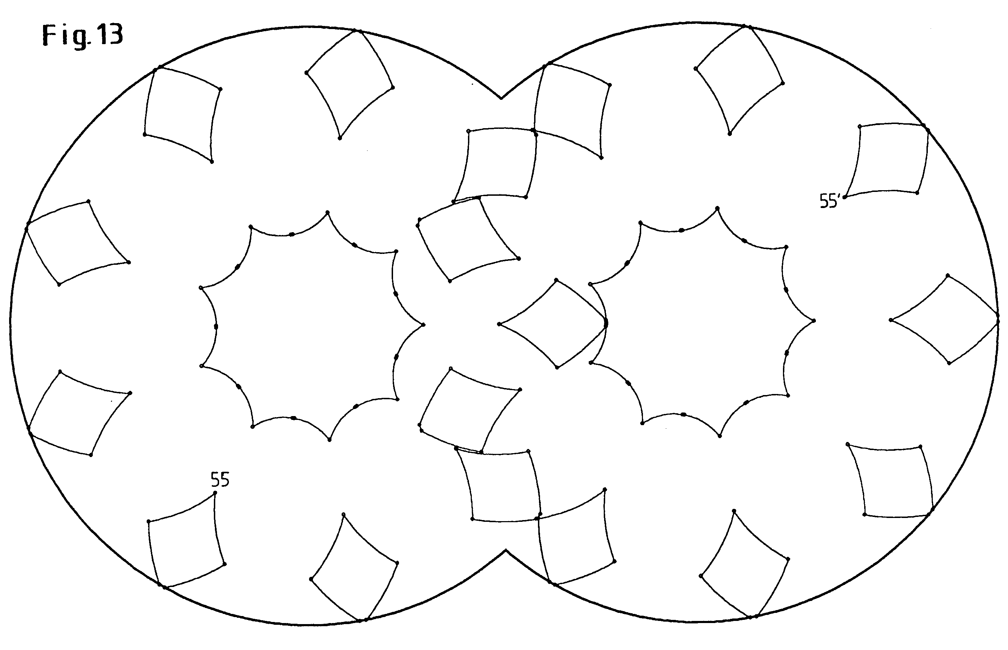

Fig. 13 zeigt einen Radialschnitt (vergleichbar der Linie A-A in Fig. 1a) durch die Knetbarren 4, 4', 5, 5' eines Mischers 6 gemäß Fig. 2.

Während bei dem Beispiel 1 das Verhältnis zwischen Durchmesser der Rotoren 8, 8' und dem Abstand zwischen den Mitten der Wellen 2,2'

$$\frac{D}{a} = 1.5416$$

betrug, beträgt es in diesem Beispiel

$$\frac{D}{a} = 1.525.$$

Dies führt dazu, daß die Innenkante (55, 55' in Figur 5 bzw. 13) der Knetbarren 4, 4', 5, 5' näher zur Welle rückt:
Betrug bei dem Beispiel 2 das Verhältnis des Abstandes zwischen Innenkante 55, 55' der Knetbarren 4, 4', 5, 5' und Mitte der Welle 2, 2' und des Abstandes zwischen den Mitten der Wellen 2, 2'

$$\frac{r}{a} = 0{,}5055,$$

beträgt das Verhältnis des Abstandes zwischen Innenkante 55, 55' der Knetbarren 4, 4', 5, 5' und Mitte der Welle 2, 2' und des Abstandes zwischen den Mitten der Wellen 2,2' in diesem Beispiel

$$\frac{r}{a} = 0{,}4889.$$

Dabei ist der Teilkreisradius gleich dem halben Abstand zwischen den Mitten der Wellen 2, 2', da die Wellen gleichschnell rotieren, so daß im Beispiel 1 der Abstand zwischen Innenkante 55, 55' des Knetbarrens 4, 4', 5, 5' und Mitte der Welle 2, 2' größer und in diesem Beispiel kleiner als der Teilkreisradius ist.

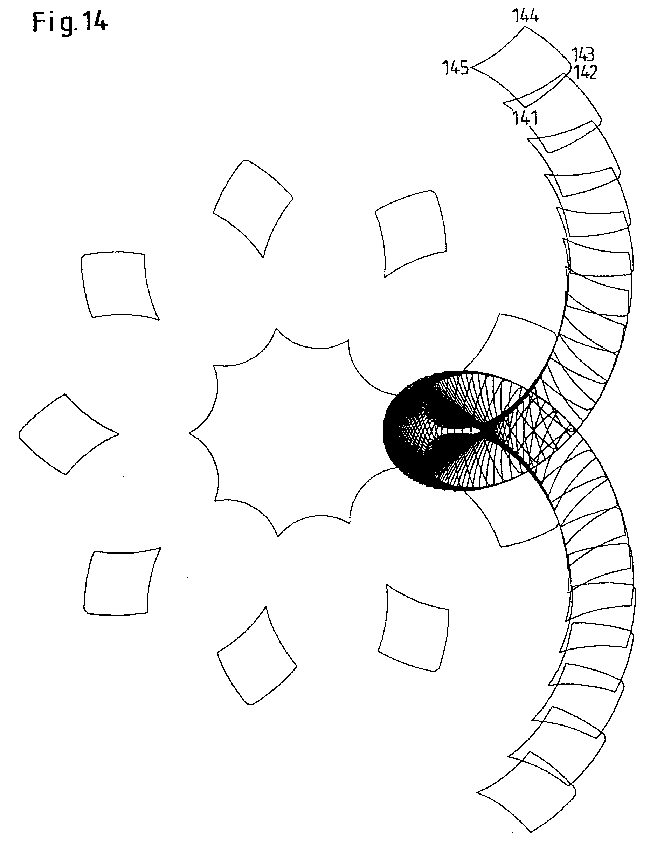

Fig. 14 zeigt in einem Radialschnitt (gemäß Linie A-A in Fig. 1a) die Relativbewegung eines Knetbarrens des Mischers 6 nach Fig. 2 bezüglich des anderen Rotors 8' in Momentaufnahmen.

Beim Vergleich zwischen Fig. 9 und 14 fällt auf, daß in Figur 9 im Inneren der vom Knetbarren 91, 92, 93, 94, 95 beschriebenen schleifenförmigen Figur eine sehr kleine Fläche 96 verbleibt, die nicht überstrichen wird. Dies entspricht einer ungereinigten Fläche auf den Stirnseiten der Zahnscheiben 3, 3'. Demgegenüber verbleibt im Inneren der in der vom Knetbarren 141, 142, 143, 144, 145 in Fig. 14 beschriebenen schleifenförmigen Figur kein nicht überstrichener Bereich. Dies entspricht einer vollständigen Abreinigung der Stirnflächen der Zahnscheiben.

**Patentansprüche**

1. Mehrachsiger Mischer/Reaktor (6), bestehend aus einem Gehäuse (1), zwei oder mehr parallelen gegensinnig rotierenden Wellen (2, 2'), auf denen axial versetzt, miteinander kämmende Gruppen von Zahnrädern (3, 3') angeordnet sind, welche durch Knetbarren (5, 5') miteinander verbunden sind und weiteren Knetbarren (4, 4'), die jeweils nur mit einem Zahnrad (3, 3') verbunden sind und ebenfalls auf den Zahnradstirnflächen angeordnet sind, dadurch gekennzeichnet,

daß jeder Zahn (7, 7') eines jeden Zahnrades (3, 3') sowohl mit dem axial davor (11, 11') als auch mit dem dahinterliegenden Zahnrad (13, 13') durch einen Knetbarren (5, 5') verbunden ist,

daß jeder Zahn (7, 7') eines jeden Zahnrades (3, 3') ausgenommen an den Stirnseiten des Mischers/Reaktors (6) an jeder der beiden Stirnseiten mindestens einen weiteren Knetbarren (4, 4') trägt,

daß die Stirnseiten eines jeden Zahnrades (3, 3'), ausgenommen diejenigen, die durch die Gehäusestirnflächen gereinigt werden, durch die Knetbarren einer jeweils anderen benachbarten Welle (2, 2) kinematisch gereinigt werden,

daß die restlichen Oberflächen der Zahnräder (3) bzw. (3') entweder durch das Gehäuse (1) oder durch die im Eingriff befindlichen Zahnräder (3') bzw. (3) einer benachbarten Welle (2') bzw. (2) oder durch die benachbarte Welle (2') bzw. (2) vollständig kinematisch gereinigt werden,

daß die Stirnflächen der Knetbarren (4, 4') soweit sie nicht mit Zahnrädern verbunden sind, durch die Zahnräder (3', 3) an einer benachbarten Welle (2', 2) gereinigt werden,

daß die restlichen Oberflächen der Knetbarren (5, 5') einer jeden Welle (2, 2') entweder durch das Gehäuse (1) oder durch eine andere benachbarte Welle (2', 2) oder durch die Knetbarren (5', 5) einer anderen benachbarten Welle (2', 2) vollständig kinematisch gereinigt werden,

daß die in einem beliebigen Radialschnitt auftretenden Schnittkanten von Zahnrädern (3, 3', 13, 13') bzw. Knetbarren (4, 4', 5, 5') geometrisch alle entweder Kreisbögen um den Rotationsmittelpunkt oder Epizykloidenabschnitte sind,

daß die in einem beliebigen Radialschnitt auftretenden Schnittkanten von Zahnrädern (3, 3', 13, 13') bzw. Knetbarren (4, 4', 5, 5') geometrisch alle konkav sind, wenn sie nach innen zeigen, und

daß die in einem beliebigen Radialschnitt auftretenden Schnittkanten der Knetbarren (4, 4', 5, 5') und die Schnittkanten der Flächen der Zahnräder (3, 3', 13, 13'), welche das Gehäuse zumindestens mit einer Kante am Umfang reinigen, geometrisch alle konvex sind, wenn sie nach außen zeigen, ausgenommen die Schnittkanten von Flächen, die durch eine andere Welle gereinigt werden.

2. Mischer/Reaktor (6) nach Anspruch 1, dadurch gekennzeichnet, daß alle Zahnräder (3, 13) bzw. (3', 13') einer Welle (2) bzw. (2') die gleiche Anzahl n von Zähnen (7) bzw. (7') haben, und

daß in einem beliebigen geometrischen Radialschnitt die Anzahl der Knetbarren einer Welle (2) bzw. (2') mindestens 3 mal n beträgt.

3. Mischer/Reaktor (6) nach Anspruch 2, dadurch gekennzeichnet, daß in einem beliebigen Radialschnitt die Anzahl der Knetbarren einer Welle (2) bzw. (2') genau 3 mal n beträgt.

4. Mischer/Reaktor (6) nach den Ansprüchen 1 bis 3, dadurch gekennzeichnet, daß alle nach außen weisenden Flächen von Zahnrädern (3, 3') bzw. (13, 13') und Knetbarren (4, 4') bzw. (5, 5'), welche zumindestens mit einer Kante das Gehäuse (1) am Umfang reinigen, durch das Gehäuse (1) oder durch eine im Eingriff befindliche Welle (2') bzw. (2) gereinigt werden.

5. Mischer/Reaktor (6) nach den Ansprüchen 1 bis 4, dadurch gekennzeichnet, daß alle Wellen (2, 2') gleichschnell rotieren.

6. Mischer/Reaktor (6) nach den Ansprüchen 1 bis 5, dadurch gekennzeichnet, daß das Gehäuse (1) und/oder die Rotoren (8, 8') mit einer Heiz-/Kühleinrichtung versehen sind.

7. Mischer/Reaktor (6) nach dem Anspruch 6, dadurch gekennzeichnet, daß ein Heiz- oder Kühlmedium in entsprechenden Leitungen durch ein Wellenende geleitet wird, jeweils ein Teilstrom des Mediums durch jeden Zahn (7, 7') des ersten Zahnrades (3, 3') und von dort den Folgen miteinander verbundener Zahnräder (3, 3', 13, 13' usw.) und Knetbarren (5, 5') folgend über die gesamte Rotorlänge bis zum letzten Zahnrad und von dort wiederum zum dem Eintritt entgegengesetzten Wellenaustritt geleitet wird, wobei ein weiterer Teilstrom des Heiz- bzw. Kühlmediums durch eine Längsbohrung der Wellen (2, 2') geführt wird, um auch diese zu beheizen bzw. zu kühlen.

8. Mischer/Reaktor (6) nach einem der Ansprüche 1 bis 7, bei dem der Abstand zwischen den Innenkanten (55, 55') der Knetbarren und der Mitte der zugehörigen Welle (2, 2') kleiner gleich dem Teilkreisradius ist.

## Claims

1. Multi-axis mixer/reactor (6), comprising a housing (1), two or more parallel, contrarotating shafts (2, 2'), on which are disposed in an axially offset manner intermeshing groups of gear wheels (3, 3') which are connected to one another by kneading bars (5, 5'), and further kneading bars (4, 4') which are connected in each case only to one gear wheel (3, 3') and are likewise disposed on the end faces of the gear wheels, characterized in

that each tooth (7, 7') of each gear wheel (3, 3') is connected by a kneading bar (5, 5') both to the gear wheel lying axially in front and to the gear wheel lying behind (13, 13'),

that each tooth (7, 7') of each gear wheel (3, 3'), apart from at the end faces of the mixer/reactor (6), carries at each of the two end faces at least one further kneading bar (4, 4'),

that the end faces of each gear wheel (3, 3'), apart from those which are cleaned by the housing end faces, are kinematically cleaned by the kneading bars of a respective other adjacent shaft (2, 2),

that the remaining surfaces of the gear wheels (3) or (3') are completely kinematically cleaned either by the housing (1) or by the meshed gear wheels (3') or (3) of an adjacent shaft (2') or (2) or by the adjacent shaft (2') or (2),

that the end faces of the kneading bars (4, 4'), provided they are not connected to gear wheels, are cleaned by the gear wheels (3', 3) on an adjacent shaft (2', 2),

that the remaining surfaces of the kneading bars (5, 5') of each shaft (2, 2') are completely kinematically cleaned either by the housing (1) or by another adjacent shaft (2', 2) or by the kneading bars (5, 5') of another adjacent shaft (2', 2),

that the cutting edges of gear wheels (3, 3', 13, 13') or kneading bars (4, 4', 5, 5') arising in any radial section are geometrically all either arcs of a circle around the centre of rotation or epicycloidal sections,

that the cutting edges of gear wheels (3, 3', 13, 13') or kneading bars (4, 4', 5, 5') arising in any radial section are geometrically all concave when they point inwards, and

that the cutting edges of the kneading bars (4, 4', 5, 5') arising in any radial section and the cutting edges of the surfaces of the gear wheels (3, 3', 13, 13'), which clean the housing at least with one edge at the periphery, are geometrically all concave when they point outwards, except for the cutting edges of surfaces which are cleaned by another shaft.

2. Mixer/reactor (6) according to claim 1, characterized in that all of the gear wheels (3, 3') or (13, 13') of a shaft (2) or (2') have the same number n of teeth (7) or (7'), and

that in any geometrical radial section the number of kneading bars of a shaft (2) or (2') is at least 3 times n.

3. Mixer/reactor (6) according to claim 2, characterized in that in any radial section the number of kneading bars of a shaft (2) or (2') is exactly 3 times n.

4. Mixer/reactor (6) according to claims 1 to 3, characterized in that all of the outwardly directed surfaces of gear wheels (3, 3') or (13, 13') and kneading bars (4, 4') or (5, 5'), which at least with one edge clean the housing (1) at the periphery, are cleaned by the housing (1) or by an engaged shaft (2') or (2).

5. Mixer/reactor (6) according to claims 1 to 4, characterized in that all of the shafts (2, 2') rotate at the same speed.

6. Mixer/reactor (6) according to claims 1 to 5, characterized in that the housing (1) and/or the rotors (8, 8') are provided with a heating/cooling device.

7. Mixer/reactor (6) according to claim 6, characterized in that a heating or cooling medium is directed in suitable lines through one shaft end, in each case a partial flow of the medium is directed through each tooth (7, 7') of the first gear wheel (3, 3') and from there to the series of interconnected gear wheels (3, 3', 13, 13' etc.) and kneading bars (5, 5'), then over the entire rotor length to the last gear wheel and from there in turn to the shaft outlet opposite the inlet, a further partial flow of the heating or cooling medium being conveyed through a longitudinal bore of the shafts (2, 2') in order to heat or cool said shafts also.

8. Mixer/reactor (6) according to one of claims 1 to 7, in which the distance between the inner edges (55, 55') of the kneading bars and the centre of the associated shaft (2, 2') is smaller than or equal to the pitch circle radius.

**Revendications**

1. Réacteur-mélangeur multi-axe (6), constitué par un logement (1), par deux arbres (2, 2') ou plus parallèles et tournant en sens inverse, sur lesquels sont disposés, en étant décalés en direction axiale, des groupes de roues dentées (3, 3') venant s'engrener l'un avec l'autre à la manière d'un peigne, qui sont reliées l'une à l'autre par des barres de malaxage (5, 5'), d'autres barres de malaxage (4, 4'), qui sont reliées respectivement à une seule roue dentée (3, 3'), étant également disposées sur les faces frontales des roues dentées, caractérisé

en ce que chaque dent (7, 7') de chaque roue dentée (3, 3') est reliée par une barre de malaxage (5, 5') aussi bien à la roue dentée (11, 11'), située devant en direction axiale, qu'à la roue dentée (13, 13'), située derrière en direction axiale,

en ce que chaque dent (7, 7') de chaque roue dentée (3, 3') porte, sur chacun des deux côtés frontaux, au moins une barre de malaxage supplémentaire (4, 4'), à l'exception des côtés frontaux du réacteur-mélangeur (6),

en ce que les côtés frontaux de chaque roue dentée (3, 3') sont soumis à un nettoyage cinétique par les barres de malaxage d'un autre arbre voisin respectif (2, 2'), à l'exception des côtés frontaux qui sont nettoyés par les faces frontales du logement,

en ce que les surfaces restantes des roues dentées (3), respectivement (3') sont soumises à un nettoyage cinétique complet, soit par le logement (1), soit par les roues dentées (3'), respectivement (3) d'un arbre voisin (2'), respectivement (2) se trouvant en engrènement, ou encore par l'arbre voisin (2'), respectivement (2),

en ce que les faces frontales des barres de malaxage (4, 4'), pour autant qu'elles ne soient pas reliées à des roues dentées, sont soumises à un nettoyage par les roues dentées (3', 3) d'un arbre voisin (2', 2),

en ce que les surfaces restantes des barres de malaxage (5, 5') de chaque arbre (2, 2') sont soumises à un nettoyage cinétique complet soit par le logement (1) soit par un autre arbre voisin (2', 2) ou encore par les barres de malaxage (5', 5) d'un autre arbre voisin (2', 2),

en ce que les arêtes de découpe des roues dentées (3, 3', 13, 13'), respectivement des barres de malaxage (4, 4', 5, 5'), telles qu'elles apparaissent dans n'importe quelle coupe radiale, possèdent toutes une géométrie, soit en forme d'arcs de cercles autour du centre de rotation, soit en forme de sections épicycloïdales,

en ce que les arêtes de découpe des roues dentées (3, 3', 13, 13'), respectivement des barres de malaxage (4, 4', 5, 5'), telles qu'elles apparaissent dans n'importe quelle coupe radiale, possèdent toutes une géométrie concave lorsqu'elles sont orientées vers l'intérieur, et

en ce que les arêtes de découpe des barres de malaxage (4, 4', 5, 5'), telles qu'elles apparaissent dans n'importe quelle coupe radiale, ainsi que les arêtes de découpe des faces des roues dentées (3, 3', 13, 13') qui nettoient le logement au moins avec une arête à la périphérie, sont toutes de géométrie convexe lorsqu'elles sont orientées vers l'extérieur, à l'exception des arêtes de découpe de face qui sont nettoyées par un autre arbre.

2. Réacteur-mélangeur (6) selon la revendication 1, caractérisé en ce que toutes les roues dentées (3, 13), respectivement (3', 13') d'un arbre (2), respectivement (2') possèdent le même nombre n de dents (7), respectivement (7'), et

en ce que, dans n'importe quelle coupe géométrique radiale, le nombre des barres de malaxage d'un arbre (2), respectivement (2') s'élève au moins à 3 fois n.

3. Réacteur-mélangeur (6) selon la revendication 2, caractérisé en ce que, dans n'importe quelle coupe radiale, le nombre des barres de malaxage d'un arbre (2), respectivement (2') s'élève exactement à 3 fois n.

4. Réacteur-mélangeur (6) selon les revendications 1 à 3, caractérisé en ce que toutes les faces des roues dentées (3, 3'), respectivement (13, 13') et des barres de malaxage (4, 4'), respectivement (5, 5'), orientées vers l'extérieur, qui nettoient le logement (1) au moins avec une arête en périphérie, sont nettoyées par le logement (1) ou par l'arbre (2'), respectivement (2) se trouvant en engrènement.

5. Réacteur-mélangeur (6) selon les revendications 1 à 4, caractérisé en ce que tous les arbres (2, 2') tournent à la même vitesse.

6. Réacteur-mélangeur (6) selon les revendications 1 à 5, caractérisé en ce que le logement (1) et/ou les rotors (8, 8') sont munis d'un mécanisme de chauffage/refroidissement.

7. Réacteur-mélangeur (6) selon la revendication 6, caractérisé en ce qu'un milieu de chauffage ou de refroidissement est guidé dans des conduits correspondants à travers une extrémité d'arbre, un courant partiel respectif du milieu étant guidé par chaque dent (7, 7') de la première roue dentée (3, 3') et de là, en suivant les successions de roues dentées (3, 3', 13, 13', etc.) et des barres de malaxage (5, 5') reliées l'une à l'autre, sur toute la longueur du rotor, jusqu'à la dernière roue dentée, et, de là, à nouveau en direction de la sortie d'arbre opposée à l'entrée, dans lequel on guide un courant partiel supplémentaire du milieu de chauffage, respectivement de refroidissement à travers un alésage longitudinal des arbres (2, 2') pour également chauffer, respectivement refroidir ces derniers.

8. Réacteur-mélangeur (6) selon l'une quelconque des revendications 1 à 7, dans lequel la distance entre les arêtes internes (55, 55') des barres de malaxage et le milieu des arbres respectifs (2, 2') est inférieure au rayon primitif de référence.

Fig.1a

Fig.1b

12

Fig. 2

Fig. 3

Fig. 4

Fig. 5

Fig. 6

Fig. 7

Fig. 8

Fig. 9

Fig. 10

Fig. 11

Fig. 12

α

121

122

Fig.13

55'

55

Fig.14